# EUROPEAN PATENT APPLICATION

(11) **EP 4 597 461 A1**
(43) Date of publication of application: **06.08.2025**
(21) Application number: 23934558.0
(22) Date of filing: 27.04.2023
(51) Int. Cl.: G07C 9/25, H04N 23/56

(54) **CAMERA ASSEMBLY, DISPLAY DEVICE AND ASSEMBLY METHOD THEREFOR**

(71) Applicant: Beijing Shiyan Technology Co., Ltd., Beijing 100176 (CN)
(72) Inventor: WANG, Zifeng, Beijing 100176 (CN); WU, Zhongyuan, Beijing 100176 (CN); DONG, Xue, Beijing 100176 (CN); LI, Zhaowei, Beijing 100176 (CN); SUN, Jiankang, Beijing 100176 (CN); WANG, Qiang, Beijing 100176 (CN)
(74) Representative: CMS Cameron McKenna Nabarro Olswang LLP
(86) International application number: PCT/CN2023/091306
(87) International publication number: WO 2024/221362

(57) **Abstract**

A camera assembly, a display device and an assembly method therefor. The camera assembly (10) comprises: a circuit board (11), and at least one first camera (12) and at least one second camera (13) which are arranged on the circuit board (11); the first camera (12) is configured to form a face image under the control of a driving signal; the second camera (13) is configured to form an eyeball image under the control of the driving signal; and the circuit board (11) is separately electrically connected to the first camera (12) and the second camera (13), and is configured to generate the driving signal and acquire the face image and the eyeball image.

## Description

### Technical Field

The present disclosure relates to, but is not limited to, the field of electronic device technologies, in particular to a camera assembly, a display device and an assembly method therefor.

### Background

Light field display technologies are technologies to reproduce an original object by recording three-dimensional position information of object information in a propagation process, which has more abundant image information. At present, due to the realism and depth information provided by three-dimensional displays, more and more people study on the three-dimensional displays, greatly enriching our lives. Observers can see three-dimensional information of an object from all sides as if they were looking at a real scene, without the need of any assistive tools. Combining the advantages of the both, light field display products emerge. As an electronic display product, a light field display product is usually equipped with a camera apparatus, which is mainly arranged inside the product. The camera apparatus provided inside the product not only makes the light field display product not abrupt in appearance, but also makes it more simple and aesthetic, and displays integrally without affecting functions.

### Summary

The following is a summary of subject matters described in the present disclosure in detail. This summary is not intended to limit the protection scope of claims.

In a first aspect, the present disclosure provides a camera assembly including: a circuit board, and at least one first camera and at least one second camera which are disposed on the circuit board. The first camera is configured to form a face image under control of a drive signal. The second camera is configured to form an eyeball image under control of a drive signal. The circuit board is electrically connected to the first camera and the second camera, respectively, and configured to generate a drive signal and acquire the face image and the eyeball image.

In an exemplary implementation, at least one light source assembly disposed on the circuit board is further included. The light source assembly is electrically connected to the circuit board, and configured to emit invisible light under control of a drive signal. The second camera is configured to receive invisible light reflected by a human eye, and form the eyeball image based on the invisible light reflected by the human eye.

In an exemplary implementation, the circuit board includes a first interface and at least one camera mounting hole. The first interface is configured to transmit signals received or output by the circuit board.

In an exemplary implementation, an external assembly is further included; the external assembly is electrically connected to the first interface, and configured to transmit signals with the first interface.

In an exemplary implementation, the external assembly includes: an external transmission section, a second interface, and a third interface, the second interface and the third interface are located at opposite sides of the external transmission section, respectively. The external transmission section is electrically connected to the second interface and the third interface, respectively, and the second interface is further electrically connected to the first interface.

In an exemplary implementation, a centerline of the circuit board includes a first centerline extending along a first direction and a second centerline extending along a second direction, the first direction intersects with the second direction.

When a quantity of the first cameras is at least two, the at least two first cameras are arranged along the first direction, and the at least two first cameras are symmetrically disposed with respect to the second centerline.

When a quantity of the second cameras is at least two, the at least two second cameras are arranged along the first direction, and the at least two second cameras are symmetrically disposed with respect to the second centerline.

When a quantity of light source assemblies is at least two, the at least two light source assemblies are arranged along the first direction, and the at least two light source assemblies are arranged symmetrically with respect to the second centerline.

In an exemplary implementation, the first camera includes a grayscale camera, the second camera includes an infrared camera, and the light source assembly includes one or more invisible light sources. The invisible light source includes an infrared light source.

In a second aspect, the present disclosure also provides a display device, including: a display assembly and the above-mentioned camera assembly, the display assembly has a display surface, a non-display surface and a plurality of side surfaces, the display surface and the non-display surface are disposed opposite to each other. The camera assembly is disposed on at least one side surface of the display assembly.

In an exemplary implementation, the display device further includes a frame; the frame includes a bezel and a cover plate disposed within the bezel, a first region and a second region are provided within the bezel, the second region is located on a side of the first region, the cover plate is disposed in the first region, and the second region is a hollow region.

The bezel is disposed around a periphery of the display assembly and the camera assembly, the cover plate covers the display assembly and is located on the non-display surface of the display assembly, and the camera assembly is disposed in the second region.

In an exemplary implementation, the display device further includes a first adapter located in the second region and fixedly connected to the frame and the camera assembly, respectively.

In an exemplary implementation, the display device further includes a housing disposed on a side of the cover plate away from the display assembly, and fixedly connected to the first adapter. A length of the housing along an arrangement direction of the display assembly and the camera assembly is less than a length of the frame along the arrangement direction of the display assembly and the camera assembly.

In an exemplary implementation, the first adapter includes: a first adapter section, a second adapter section, a third adapter section, and a fourth adapter section; each of the first to fourth adapter sections has a first surface, a second surface, and a plurality of side surfaces. The first surface and the second surface are opposite to each other.

The third adapter section, the first adapter section, the fourth adapter section, and the second adapter section are sequentially arranged along a third direction, the first adapter section and the second adapter section extend along the third direction, an extension direction of the third adapter section extends along a fourth direction, an extension direction of the fourth adapter section extends along a fifth direction, and any two of the third direction, the fourth direction and the fifth direction intersect with each other.

One side surface of the third adapter section and the second surface of the first adapter section are connected and disposed at an included angle, one side surface of the first adapter section is connected with a middle part of the first surface of the fourth adapter section, and one side surface of the second adapter section and the second surface of the fourth adapter section are connected and disposed at an included angle.

An included angle between the first adapter section and the third adapter section is larger than an included angle between the fourth adapter section and the second adapter section, and an included angle between the fourth adapter section and the first surface of the first adapter section is larger than an included angle between the fourth adapter section and the second surface of the first adapter section.

The included angle between the fourth adapter section and the second adapter section is an acute angle.

In an exemplary implementation, the display device further includes: a first fixing connector, a second fixing connector, and a third fixing connector, the camera assembly has a camera mounting hole, the first adapter has a first mounting hole located at the third adapter section, a second mounting hole located at the fourth adapter section, a third mounting hole located at the second adapter section, the bezel has a fourth mounting hole, and the housing has a fifth mounting hole.

The first fixing connector fixes the first adapter with the frame through the first mounting hole and the fourth mounting hole. The second fixing connector fixes the first adapter with the camera assembly through the second mounting hole and the camera mounting hole. The third fixing connector fixes the first adapter with the housing through the third mounting hole and the fifth mounting hole. The first fixing connector, the second fixing connector, and the third fixing connector include screws.

In an exemplary implementation, the display device further includes: a transparent protective layer and an adhesive layer, the transparent protective layer is disposed on a light emitting surface of the display assembly, and covers the display assembly and the camera assembly. The transparent protective layer is attached to the frame through the adhesive layer. The transparent protective layer includes tempered glass.

In an exemplary implementation, the display device further includes: a light shielding layer disposed on a side of the transparent protective layer close to the display assembly, the light shielding layer includes a first via region, a second via region, a third via region, and a fourth via region; the camera assembly includes a first camera, a second camera and a light source assembly.

The display assembly includes a display region and a non-display region, and an orthographic projection of the light shielding layer on the transparent protective layer is overlapped, at least partially, with an orthographic projection of the non-display region of the display assembly on the transparent protective layer, and is not overlapped with orthographic projections of the display region and the first camera on the transparent protective layer.

An orthographic projection of the first via region on the transparent protective layer is overlapped, at least partially, with the orthographic projection of the display region on the transparent protective layer. An orthographic projection of the second via region on the transparent protective layer is overlapped, at least partially, with the orthographic projection of the first camera on the transparent protective layer. An orthographic projection of the third via region on the transparent protective layer is overlapped, at least partially, with an orthographic projection of the second camera on the transparent protective layer. An orthographic projection of the fourth via region on the transparent protective layer is overlapped, at least partially, with an orthographic projection of the light source assembly on the transparent protective layer.

In an exemplary implementation, the display device further includes: a light filter layer configured to transmit invisible light emitted by the light source assembly, and disposed in a same layer as the light shielding layer. The light filter layer is located in the third via region and the fourth via region.

In an exemplary implementation, the light filter layer includes a first sub-filter located in the third via region, and a second sub-filter located in the fourth via region. The cameras includes shooting lenses, the second via region and the third via region are circular in shape, and have diameters larger than diameters of a shooting lens of the second camera and a shooting lens of the first camera.

In an exemplary implementation, the display device further includes: a color matching layer disposed in a same layer as the light shielding layer. The light shielding layer further includes a fifth via region, an orthographic projection of the fifth via region on the transparent protective layer is located between the orthographic projection of the display region on the transparent protective layer and an orthographic projection of the camera assembly on the transparent protective layer, and the color matching layer is located in the fifth via region.

In an exemplary implementation, the display device further includes: a control circuit board, the control circuit board includes a fourth interface, the camera assembly includes a circuit board and an external assembly that includes a third interface, the fourth interface of the control circuit board is electrically connected to the third interface of the camera assembly. The control circuit board is configured to generate a control signal and track a position of an eyeball according to a face image and an eyeball image. The circuit board is configured to generate a drive signal based on the control signal.

In an exemplary implementation, the display device further includes a shielding layer and an isolation layer. The shielding layer is disposed between the display assembly and the control circuit board. The isolation layer is disposed on a side of the camera assembly close to the housing, and partially attached to the shielding layer.

In a third aspect, the present disclosure also provides a method for assembling a display device, configured to form the above-mentioned display device. The display device includes: a display assembly, a camera assembly, a transparent protective layer, an adhesive layer, a first adapter, a frame, and a housing. The method includes: attaching the display assembly to the transparent protective layer; fixing the first adapter to the frame; forming the adhesive layer on the frame, and attaching the frame formed with the adhesive layer to the transparent protective layer; fixing the camera assembly to the first adapter; and fixing the housing to the first adapter.

In an exemplary implementation, the display device further includes a shielding layer, a control circuit board, and an isolation layer. After attaching the display assembly to the transparent protective layer, the method further includes: sequentially disposing the shielding layer and the control circuit board on a side of the display assembly away from the transparent protective layer. After fixing the camera assembly to the first adapter, the method further includes: partially attaching the isolation layer to the shielding layer.

In an exemplary implementation, the display device includes a first fixing connector, a second fixing connector, and a third fixing connector, the first adapter has a first mounting hole, a second mounting hole, and a third mounting hole, the frame has a fourth mounting hole, the housing has a fifth mounting hole, and the camera assembly has a camera mounting hole.

Fixing the first adapter to the frame includes: fixing, by the first fixing connector, the first adapter to the frame through the first mounting hole and the fourth mounting hole.

Fixing the camera assembly to the first adapter includes: fixing, by the second fixing connector, the camera assembly to the first adapter through the second mounting hole and the camera mounting hole.

Fixing the housing to the first adapter includes: fixing, by the third fixing connector, the housing to the first adapter through the third mounting hole and the fifth mounting hole.

Other aspects of the present disclosure may be comprehended after the drawings and the detailed descriptions are read and understood.

### Brief Description of Drawings

Accompany drawings are used to provide further understanding of technical solutions of the present disclosure, and form a part of the description. The accompany drawings and embodiments of the present disclosure are adopted to explain the technical solutions of the present disclosure, but do not form limitations on the technical solution of the present disclosure.
FIG. 1 is a front view of a camera assembly according to an embodiment of the present disclosure.
FIG. 2 is a side view of an external assembly.
FIG. 3 is a front view of a display device according to an embodiment of the present disclosure.
FIG. 4 is a side view of the display device according to an embodiment of the present disclosure.
FIG. 5 is an enlarged internal view of a dashed line region in FIG. 4.
FIG. 6 is a side view of the frame.
FIG. 7 is a side view of the housing.
FIG. 8 is a side view of the first adapter.
FIG. 9 is another front view of the display device.
FIG. 10 is a rear view of the display device.
FIG. 11 is a schematic diagram of a shooting angle of a camera assembly.
FIG. 12 is an assembly diagram of a display device.

### Detailed Description

To make the objectives, technical solutions, and advantages of the present disclosure clearer, the embodiments of the present disclosure will be described in detail below with reference to the accompany drawings. It is to be noted that implementations may be implemented in multiple different forms. Those of ordinary skills in the art can easily understand such a fact that implementations and contents may be transformed into various forms without departing from the purpose and scope of the present disclosure. Therefore, the present disclosure should not be explained as being limited to the contents recorded in the following implementations only. The embodiments and features in the embodiments of the present disclosure may be randomly combined with each other if there is no conflict. In order to keep following description of the embodiments of the present disclosure clear and concise, detailed description of part of known functions and known components are omitted in the present disclosure. The drawings in the embodiments of the present disclosure relate only to the structures involved in the embodiments of the present disclosure, and other structures may be described with reference to conventional designs.

Scales of the drawings in the present disclosure may be used as a reference in actual processes, but are not limited thereto. For example, a width-length ratio of a channel, a thickness and spacing of each film layer, and a width and spacing of each signal line may be adjusted according to actual needs. A quantity of pixels in a display substrate and a quantity of sub-pixels in each pixel are not limited to numbers shown in the drawings. The drawings described in the present disclosure are schematic structural diagrams only, and one mode of the present disclosure is not limited to shapes, numerical values, or the like shown in the drawings.

Ordinal numerals "first", "second", "third", etc., in the specification are set not to form limits in numbers but only to avoid confusion between composition elements.

**In** the specification, for convenience, expressions "central", "above", "below", "front", "back", "vertical", "horizontal", "top", "bottom", "inside", "outside", etc., indicating directional or positional relationships are used to illustrate positional relationships between the composition elements, not to indicate or imply that involved devices or elements are required to have specific orientations and be structured and operated with the specific orientations but only to easily and simply describe the present specification, and thus should not be understood as limitations on the present disclosure. The positional relationships between the constituent elements may be changed as appropriate according to a direction according to which each constituent element is described. Therefore, appropriate replacements based on situations are allowed, which is not limited to the expressions in the specification.

In the specification, unless otherwise specified and defined, terms "mounting", "mutual connection", and "connection" should be understood in a broad sense. For example, a connection may be fixed connection, or a detachable connection, or an integral connection; it may be a mechanical connection or an electrical connection; it may be a direct connection, or an indirect connection through middleware, or internal communication inside two elements. Those of ordinary skills in the art may understand specific meanings of the above terms in the present disclosure according to specific situations.

In the specification, "electrical connection" includes connection of composition elements through an element with a certain electrical action. An "element with a certain electrical action" is not particularly limited as long as electrical signals between the connected constituent elements may be sent and received. Examples of the "element with the certain electrical action" not only include an electrode and a wiring, but also include a switching element such as a transistor, a resistor, an inductor, a capacitor, another element with various functions, etc.

In the specification, "parallel" refers to a state in which an angle formed by two straight lines is above -10° and below 10°, and thus may include a state in which the angle is above -5° and below 5°. In addition, "perpendicular" refers to a state in which an angle formed by two straight lines is above 80° and below 100°, and thus may include a state in which the angle is above 85° and below 95°.

In the specification, a "film" and a "layer" are interchangeable. For example, a "conductive layer" may be replaced with a "conductive thin film" sometimes. Similarly, an "insulation film" may be replaced with an "insulation layer" sometimes.

In the specification, "disposed in a same layer" refers to a structure formed by patterning two (or more than two) structures through a same patterning process, and their materials may be the same or different. For example, materials of precursors for forming multiple structures disposed in a same layer are the same, and final materials may be the same or different.

Triangle, rectangle, trapezoid, pentagon, hexagon, etc. in this specification are not strictly defined, and they may be approximate triangle, rectangle, trapezoid, pentagon, hexagon, etc. There may be some small deformations caused by tolerance, and there may be chamfer, arc edge, deformation, etc.

In the present disclosure, "about" refers to that a boundary is not defined so strictly and numerical values within a range of process and measurement errors are allowed.

A camera apparatus in a light field display product needs to have functions, such as eye tracking, face recognition, and personnel induction, which make a structure of the camera apparatus more complex and difficult to install. Therefore, a camera assembly is provided in an embodiment of the present disclosure.

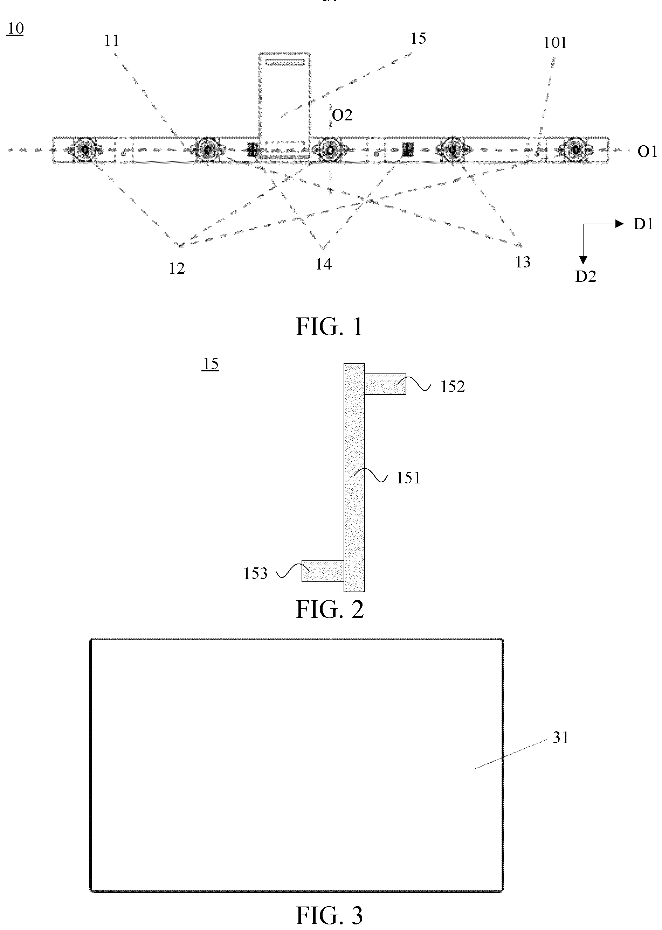

FIG. 1 is a front view of a camera assembly according to an embodiment of the present disclosure. As shown in FIG. 1, the camera assembly 10 according to an embodiment of the present disclosure may include a circuit board 11, at least one first camera 12 and at least one second camera 13, which are disposed on the circuit board.

In an exemplary implementation, the first camera 12 is configured to form a face image under control of a drive signal. The second camera 13 is configured to form an eyeball image under the control of a drive signal. The circuit board 11 is electrically connected to the first camera 12 and the second camera 13, respectively, and configured to generate the drive signal, and acquire the face image and the eyeball image.

In the present disclosure, the first camera can be used to perform face recognition and personnel induction, and the second camera can be used to perform eye tracking.

In an exemplary implementation, the circuit board may include an element for performing a computing task, such as a printed circuit board and other electronic devices, and may also be connected with an external smart device (e.g. a mobile phone, a computer, and a tablet computer) through wired connection or wireless connection. Image data are processed by virtue of a processor of the smart device (e.g. the mobile phone, the computer, and the tablet computer).

In an exemplary implementation, a cross section of the circuit board may be rectangular, and a longitudinal section of the circuit board may be in a groove structure, which is not limited in the present disclosure, as long as functionality can be performed.

In an exemplary implementation, a quantity of the first cameras 12 may be determined according to an application scenario of the camera assembly. FIG. 1 is illustrated with three first cameras 12 as an example, which is not limited in the present disclosure.

In an exemplary implementation, a quantity of the second cameras 13 may be determined according to an application scenario of the camera assembly. FIG. 1 is illustrated with two second cameras as an example, which is not limited in the present disclosure.

The camera assembly according to an embodiment of the present disclosure includes the circuit board, the at least one first camera and the at least one second camera which are disposed on the circuit board. The first camera is configured to form a face image under the control of the drive signal. The second camera is configured to form an eyeball image under the control of the drive signal. The circuit board is electrically connected to the first camera and the second camera, respectively, and configured to generate the drive signal and acquire the face image and the eyeball image. According to the present disclosure, not only a structure of the camera assembly is simplified, but also installation of the camera assembly is facilitated, by integrating a plurality of cameras realizing different functions in a same assembly.

In an exemplary implementation, the first camera 12 may include a grayscale camera.

In an exemplary implementation, the second camera 13 may include an infrared camera.

In an exemplary implementation, as shown in FIG. 1, the camera assembly may further include at least one light source assembly 14 disposed on the circuit board 11.

In an exemplary implementation, the light source assembly 14 may be electrically connected to the circuit board 11, and configured to emit invisible light under the control of the drive signal. The second camera 13 is configured to receive invisible light reflected by a human eye, and form the eyeball image based on the invisible light reflected by the human eye.

In an exemplary implementation, the light source assembly 14 may include one or more invisible light sources. The more the invisible light sources, the higher the accuracy of the eye tracking.

In an exemplary implementation, invisible light sources located in a same light source assembly may be, or may not be distributed uniformly.

In an exemplary implementation, the invisible light source includes an infrared light source, or the invisible light source may include an ultraviolet light source. For example, the invisible light source may be an infrared Light-Emitting Diode (LED) light source, or an ultraviolet LED light source.

In an exemplary implementation, an eyeball may reflect invisible light, thereby forming a reflection point on the eyeball. Specifically, since a wavelength perceivable by the human eye ranges from 380 nanometers to 780 nanometers, in order to avoid interference with normal viewing, infrared light sources with low eye sensitivity and less harm are primarily selected as the invisible light source.

In an exemplary implementation, the invisible light source may be annular, triangular, square, rectangular, elliptical, hyperbolic, or in any other regular or irregular shape, which is not limited in the present disclosure.

In an exemplary implementation, as shown in FIG. 1, the circuit board 11 in the camera assembly may include a first interface (not shown in the figure) and at least one camera mounting hole 101.

In an exemplary implementation, the first interface is configured to transmit signals received or output by the circuit board 11.

In an exemplary implementation, a plurality of camera mounting holes 101 may be symmetrically disposed. A quantity of the camera mounting holes 101 is determined according to a position where the camera assembly is mounted, which is not limited in the present disclosure.

In an exemplary implementation, as shown in FIG. 1, the camera assembly may further include an external assembly 15.

In an exemplary implementation, the external assembly 15 may be electrically connected to the first interface, and configured to transmit a signal with the first interface.

In an exemplary implementation, FIG. 2 is a side view of an external assembly. As shown in FIG. 2, an external assembly 15 may include an external transmission section 151, a second interface 152, and a third interface 153, the second interface 152 and the third interface 153 may be located on opposite sides of the external transmission section 151.

In an exemplary implementation, the external transmission section 151 is electrically connected to the second interface 152 and the third interface 153, respectively, and the second interface 152 is further electrically connected to the first interface.

In an exemplary implementation, as shown in FIG. 1, the circuit board may be in an axial symmetric structure. A centerline of the circuit board may include a first centerline O1 extending along a first direction D1, and a second centerline O2 extending along a second direction D2, the first direction D1 intersects with the second direction D2.

In an exemplary implementation, when there are at least two first cameras 12, the at least two first cameras 12 are arranged in the first direction D1 and disposed symmetrically with respect to the second centerline O2. When the quantity of the first cameras 12 is an odd number, one of the first cameras 12 is located at a position on the second centerline, and the other first cameras 12 are disposed symmetrically with respect to the second centerline. When the quantity of the first cameras 12 is an even number, half of the first cameras 12 are located on a side of the second centerline, the other half of the first cameras 12 are located on the other side of the second centerline, and the first cameras 12 located on two sides of the second centerline are symmetrically disposed.

In the present disclosure, the symmetrical disposing of the at least two first cameras 12 with respect to the second centerline O2 can be corrected according to images generated by the at least two first cameras, which can improve the accuracy of the face recognition.

In an exemplary implementation, when there are at least two second cameras 13, the at least two second cameras 13 are arranged along the first direction D1 and disposed symmetrically with respect to the second centerline O2. When the quantity of the second cameras 13 is an odd number, one of the second cameras 13 is located at a position on the second centerline, and the other second cameras 13 are disposed symmetrically with respect to the second centerline. When the quantity of the second cameras 13 is an even number, half of the second cameras 13 are located on a side of the second centerline, the other half of the second cameras 13 are located on the other side of the second centerline, and the second cameras 13 located on two sides of the second centerline are symmetrically disposed.

In the present disclosure, the symmetrical disposing of the at least two second cameras 13 with respect to the second centerline O2 can be corrected according to images generated by the at least two second cameras, which can improve the accuracy of the eyeball tracking.

In an exemplary implementation, at least one of the quantity of the first cameras 12 and the quantity of the second cameras 13 is an even number.

In an exemplary implementation, when there are at least two light source assemblies, the at least two light source assemblies are arranged along the first direction D1 and disposed symmetrically with respect to the second centerline O2.

In an exemplary implementation, when the quantity of light source assemblies 15 may be an even number, half of the light source assemblies 15 are located on a side of the second centerline, the other half of the light source assemblies 15 are located on the other side of the second centerline, and the light source assemblies 15 located on two sides of the second centerline are symmetrically disposed.

In the present disclosure, the symmetrical disposing of the at least two light source assemblies 15 with respect to the second centerline O2 can make the emitted invisible light more uniform, and can improve the accuracy of the eye tracking.

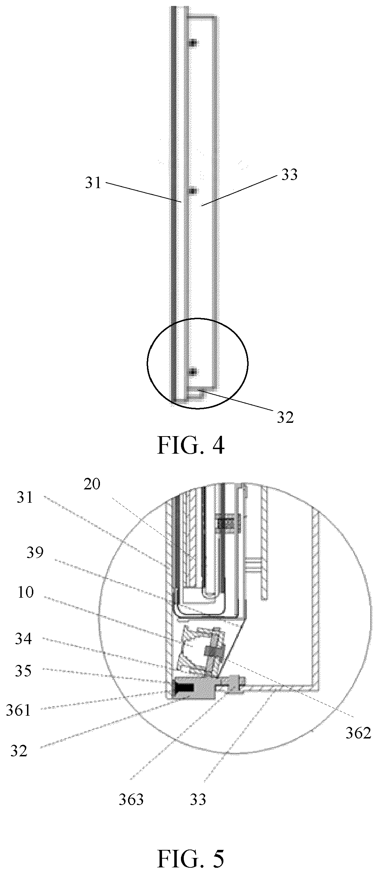

FIG. 3 is a front view of a display device according to an embodiment of the present disclosure, FIG. 4 is a side view of the display device according to an embodiment of the present disclosure, and FIG. 5 is an enlarged internal view of a dashed line region in FIG. 4. As shown in FIGs. 3 to 5, the display device according to an embodiment of the present disclosure may include a display assembly 20 and a camera assembly 10, the display assembly 20 has a display surface, a non-display surface, and a plurality of side surfaces, the display surface and the non-display surface are disposed opposite to each other. The camera assembly 10 may be disposed on at least one side surface of the display assembly 20.

In an exemplary implementation, the display assembly may be one of a liquid crystal display apparatus, an Organic Light Emitting Diode (OLED) display apparatus, a quantum dot light emitting display apparatus, a Micro LED display apparatus, a Micro LED display apparatus, and a Mini LED display apparatus, which may be determined according to actual requirements.

In an exemplary implementation, when the display assembly is a liquid crystal display apparatus, a type of the liquid crystal display apparatus may be a Twisted Nematic (TN) type, a Vertical Alignment (VA) type, an In-Plane Switching (IPS) type, or an Advanced Super Dimension Switch (ADS) type, which is not limited in the present disclosure.

In an exemplary implementation, the display assembly may be a rigid display apparatus or a flexible display apparatus (that is, flexible, or foldable).

The camera assembly is the camera assembly according to any one of the aforementioned embodiments, and an implementation principle and an implementation effect are similar, which is not repeated here.

In an exemplary implementation, as shown in FIG. 5, the display device may further include a transparent protective layer 31, a frame 32, a housing 33, a first adapter 34, an adhesive layer 35, a first fixing connector 361, a second fixing connector 362, and a third fixing connector 363.

In an exemplary implementation, as shown in FIGs. 3 to 5, the transparent protective layer 31 may be disposed on a light emitting surface of the display assembly 20, and cover the display assembly 20 and the camera assembly 10.

In an exemplary implementation, the transparent protective layer 31 may be attached to the frame 32 by the adhesive layer 35.

In an exemplary implementation, the adhesive layer 35 may be disposed at an edge of a side of the frame 32 close to the display assembly 20.

In the present disclosure, disposing the transparent protective layer 31 can enable the camera assembly to be located inside the display device, and can maintain a simple appearance of an entire device.

In an exemplary implementation, the transparent protective layer 31 may include tempered glass.

In the present disclosure, the transparent protective layer 31 may include the tempered glass, which can ensure flatness of the display surface of the display device while improve strength of the display device, and can protect the product well.

In an exemplary implementation, the adhesive layer 35 may include a double-sided colloid.

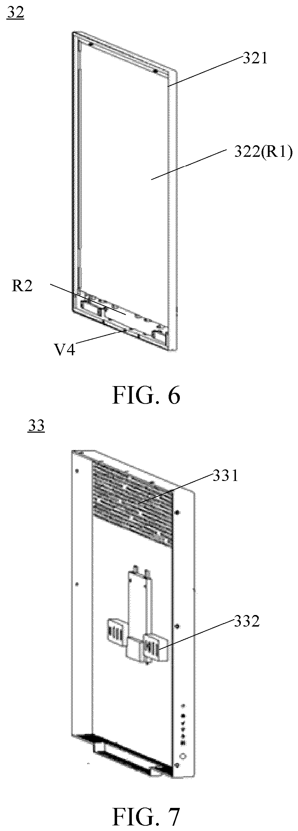

In an exemplary implementation, FIG. 6 is a side view of the frame. As shown in FIG. 6, the frame 32 may include a bezel 321 and a cover plate 322 disposed within the bezel 321, there are a first region R1 and a second region R2 within the bezel 321, and the second region R2 is located on a side of the first region R1. The frame is a carrier for fixing and assembling the entire display device.

In an exemplary implementation, as shown in FIG. 6, the cover plate 322 is disposed in the first region R1, and the second region R2 is a hollow region.

In an exemplary implementation, as shown in FIG. 5, the bezel 321 is disposed around a periphery of the display assembly 20 and the camera assembly 10, the cover plate 322 covers the display assembly 20 and is located on the non-display surface of the display assembly 20, and the camera assembly 10 is disposed in the second region R2.

The frame 32 in the present disclosure is provided with a hollow region where the camera assembly is provided to reduce a thickness of the display device.

In an exemplary implementation, the frame may be made of a metal plate. The frame made of the metal plate can improve the strength of the display device.

In an exemplary implementation, FIG. 7 is a side view of the housing. As shown in FIG. 7, the display device may further include the housing 33. The housing 33 may be disposed on a side of the cover plate away from the display assembly 20, and fixedly connected to the first adapter 34.

In an exemplary implementation, the housing may be made of a metal plate or plastic, which is not limited in the present disclosure.

In an exemplary implementation, as shown in FIG. 7, the housing 33 may have an array of heat dissipation holes 331. The heat dissipation holes are beneficial to heat dissipation.

In an exemplary implementation, as shown in FIG. 7, a dust removal assembly 332 may also be provided on a side of the housing 33 close to the display assembly. The dust removal assembly is beneficial to extending the service life of the display device.

In an exemplary implementation, a heat dissipation hole may include a small-sized fan.

In an exemplary implementation, a length of the housing along an arrangement direction of the display assembly and the camera assembly may be less than a length of the housing along an arrangement direction of the display assembly and the camera assembly.

In an exemplary implementation, as shown in FIGs. 5 and 6, the first adapter 34 may be located in the second region R2, and fixedly connected to the frame 32 and the camera assembly 10, respectively.

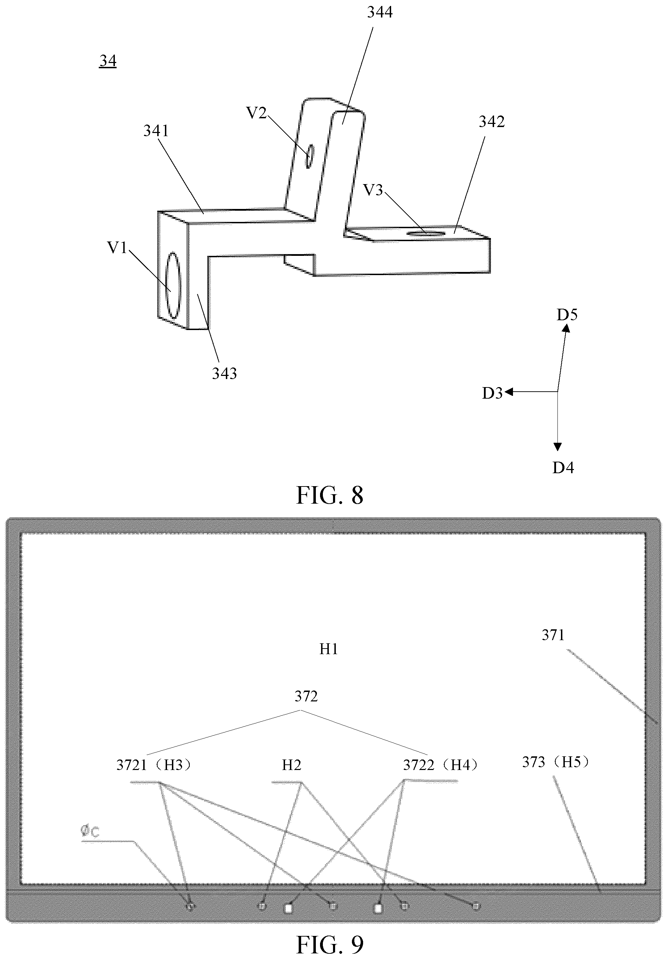

In an exemplary implementation, FIG. 8 is a side view of the first adapter. As shown in FIGs. 5 and 8, the first adapter 34 may include a first adapter section 341, a second adapter section 342, a third adapter section 343 and a fourth adapter section 344. Each of the first to fourth adapter sections 341 to 344 has a first surface, a second surface, and a plurality of side surfaces, the first surface and the second surface are disposed opposite to each other.

In an exemplary implementation, as shown in FIG. 8, the third adapter section 343, the first adapter section 341, the fourth adapter section 344, and the second adapter section342 are arranged in sequence along a third direction D3, the first adapter section 341 and the second adapter section 342 extends in the third direction D3, the third adapter section 343 extends along a fourth direction D4, the fourth adapter section 344 extends along a fifth direction D5, and any two of the third direction D3, the fourth direction D4, and the fifth direction D5 intersect with each other.

**In** an exemplary implementation, as shown in FIG. 8, one side surface of the third adapter section 343 and the second surface of the first adapter section 341 are connected and disposed at an included angle, one side surface of the first adapter section 341 and a middle part of the first surface of the fourth adapter section 344 are connected, and one side surface of the second adapter section 342 and the second surface of the fourth adapter section 344 are connected and disposed at an included angle.

**In** an exemplary implementation, as shown in FIG. 8, the included angle between the first adapter section 341 and the third adapter section 343 is greater than the included angle between the fourth adapter section 344 and the second adapter section 342, and an included angle between the fourth adapter section 344 and the first surface of the first adapter section 341 is greater than an included angle between the fourth adapter section 344 and the second surface of the first adapter section 341.

**In** an exemplary implementation, as shown in FIG. 8, the included angle between the fourth adapter section 344 and the second adapter section 342 may be an acute angle.

**In** an exemplary implementation, the included angle between the first adapter section 341 and the third adapter section 343 may be 90 degrees.

**In** an exemplary implementation, the first, second, third, and fourth adapter sections 341, 342, 343, and 344 may be integrally stamped or bent molded with metal plates, or may be integrally injection molded with plastic, and an integrally molded structure may reduce connection and assembly, reduce manufacturing processes, and increase the strength of the entire first adapter.

In an exemplary implementation, the circuit board in the camera assembly is provided with surfaces of the first camera and the second camera being in direct contact with the second surface of the fourth adapter section.

In an exemplary implementation, the camera assembly has a camera mounting hole.

In the exemplary implementation, as shown in FIG. 8, the first adapter 34 has a first mounting hole V1 located at the third adapter section 343, a second mounting hole V2 located at the fourth adapter section 344, and a third mounting hole V3 located at the second adapter section 342.

In an exemplary implementation, as shown in FIG. 6, the bezel 321 has a fourth mounting hole V4.

In an exemplary implementation, the housing has a fifth mounting hole.

In an exemplary implementation, the first fixing connector 361 may fix the first adapter 34 with the frame 32 through the first mounting hole and the fourth mounting hole, as shown in conjunction with FIGs. 5, 6 and 8.

In an exemplary implementation, the first fixing connector 361 may be a screw, which may screw the first adapter to the frame 32.

In an exemplary implementation, as shown in conjunction with FIGs. 5 and 8, the second fixing connector 362 fixes the camera assembly 10 with the first adapter 34 through the second mounting hole and the camera mounting hole.

In an exemplary implementation, the second fixing connector 362 may be a screw which may screw the camera assembly to the first adapter.

In an exemplary implementation, as shown in FIG. 5, the third fixing connector 363 fixes the first adapter 50 with the housing 33 through the third mounting hole and the fifth mounting hole.

In an exemplary implementation, the third fixing connector 363 may be a screw which may screw the housing to the first adapter.

In the present disclosure, by providing a first adapter, the housing, the frame and the camera assembly can be fixedly connected, such that the display device including the camera assembly can be installed and disassembled easily, which is convenient for later debugging and repairing.

In an exemplary implementation, FIG. 9 is another front view of the display device. As shown in FIG. 9 the display device may further include a light shielding layer 371, a light filter layer 372, and a color matching layer 373.

In an exemplary implementation, the light shielding layer 371 is disposed on a side of the transparent protective layer close to the display assembly 20.

The light shielding layer 371 in the present disclosure is provided on the side of the transparent protective layer close to the display assembly 20, so as to protect the light shielding layer from being touched by human beings, and ensure an aesthetic appearance of the display device.

In an exemplary implementation, the light shielding layer 371 may be made of a black paint.

In an exemplary implementation, the light shielding layer 371 includes a first via region H1, a second via region H2, a third via region H3, and a fourth via region H4. The camera assembly includes a first camera, a second camera and a light source assembly.

In an exemplary implementation, the display assembly includes a display region B1 and a non-display region, and an orthographic projection of the light shielding layer 371 on the transparent protective layer is overlapped, at least partially, with an orthographic projection of the non-display region of the display assembly on the transparent protective layer, and is not overlapped with orthographic projections of the display region and the first camera on the transparent protective layer. For example, the orthographic projection of the light shielding layer 371 on the transparent protective layer covers the orthographic projection of the non-display region of the display assembly on the transparent protective layer.

In an exemplary implementation, an orthographic projection of the first via region H1 on the transparent protective layer is overlapped, at least partially, with the orthographic projection of the display region on the transparent protective layer, an orthographic projection of the second via region H2 on the transparent protective layer is overlapped, at least partially, with the orthographic projection of the first camera on the transparent protective layer, an orthographic projection of the third via region H3 on the transparent protective layer is overlapped, at least partially, with an orthographic projection of the second camera on the transparent protective layer, and an orthographic projection of the fourth via region H4 on the transparent protective layer is overlapped, at least partially, with an orthographic projection of the light source assembly on the transparent protective layer.

In an exemplary implementation, a shape of the first via region H1 may be matched with a shape of the display region, and may be square, for example.

In an exemplary implementation, shapes of the second via region H2 and the third via region H3 may be circular.

In an exemplary implementation, a shape of the fourth via region H4 may be matched with a shape of the light source assembly, and may be square, for example.

In an exemplary implementation, the light filter layer 372 is configured to transmit invisible light emitted by the light source assembly, and is disposed in a same layer as the light shielding layer 371. The filter layer 372 is located in the third via region H3 and the fourth via region H4.

In an exemplary implementation, the light filter layer 372 may be a paint that infrared light can pass through.

In an exemplary implementation, the light filter layer 372 may include a first sub-filter 3721 and a second sub-filter 3722. The first sub-filter 3721 is located in the third via region H3, and the second sub-filter 3721 is located in the fourth via region H4.

In an exemplary implementation, the cameras provide various angles that correspond to different diameters. At that time, a maximum diameter can also be taken for a compatibility design including usage scenarios in various situations. Since a shooting angle of the second camera is smaller than a shooting angle of the first camera, a contact area between the second camera and the transparent protective layer is also smaller than a contact area between the first camera and the transparent protective layer. In order to ensure the aesthetics, dimensions of the second via region and the third via region are designed based on the contact area between the first camera and the transparent protective layer. For example, diameters of the second via region and the third via region are the same, and the diameter Φ c is larger than a diameter of a shooting lens of the first camera and a diameter of a shooting lens of the second camera.

In an exemplary implementation, the light shielding layer may further include a fifth via region H5, an orthographic projection of the fifth via region H5 on the transparent protective layer is located between the orthographic projection of the display region on the transparent protective layer and an orthographic projection of the camera assembly on the transparent protective layer.

In an exemplary implementation, the fifth via region H5 may be strip-shaped, and a length of the fifth via region H5 may be equal to a length of the transparent protective layer.

In an exemplary implementation, the color matching layer 373 may be disposed in the same layer as the light shielding layer 371, and located in the fifth via region H5.

In an exemplary implementation, the color matching layer may serve as a separator which separates an upper part of the display device from and a lower partition of the display device for decoration, and color matching may be performed according to a requirement for the appearance of the display device.

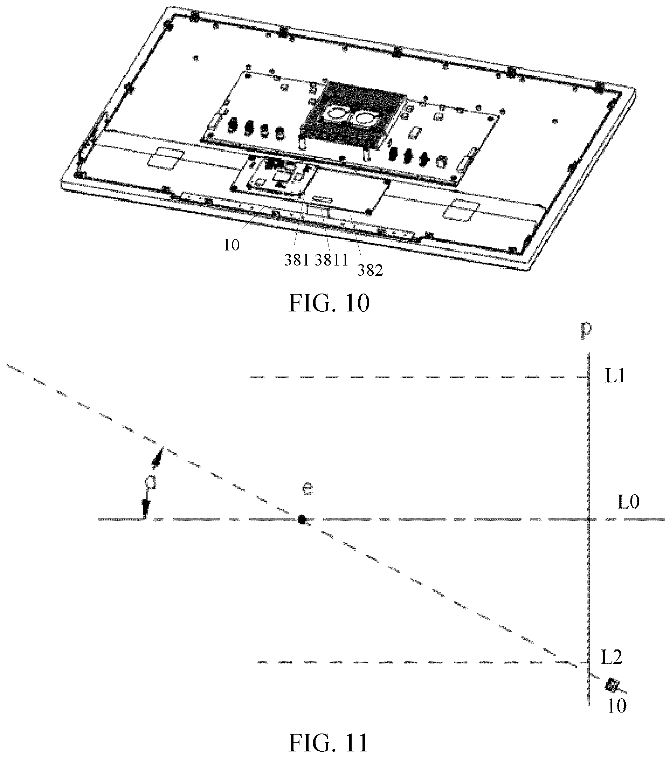

In an exemplary implementation, FIG. 10 is a rear view of a display device. FIG. 10 is a rear view of a display device after removing a frame and a housing. As shown in FIG. 10, the display device may further include a control circuit board 381 including a fourth interface 3811, the camera assembly includes a circuit board and an external assembly that includes a third interface, the fourth interface 3811 of the control circuit board 381 is electrically connected to the third interface of the camera assembly.

In an exemplary implementation, the control circuit board 81 is configured to generate a control signal and track a position of an eyeball according to a face image and an eyeball image. The circuit board is configured to generate a drive signal based on the control signal.

In an exemplary implementation, the control circuit board can process the face image and the eyeball image to obtain an eye gaze point position, and operate the display assembly based on the eye gaze point position, to perform human-computer interaction, gaze point rendering and other functions.

In an exemplary implementation, as shown in FIG. 10, the display device may further include a shielding layer 382. The shielding layer 382 may be disposed between the display assembly 20 and the control circuit board 381.

In an exemplary implementation, the shielding layer 382 may be disposed to shield a signal between the control circuit board and a circuit board in the display assembly, and interference between signals may be avoided.

In an exemplary implementation, the shielding layer 382 may be made of a metallic material.

In an exemplary implementation, as shown in FIG. 5, the display device may further include an isolation layer 39. The isolation layer 39 may be disposed on a side of the camera assembly 10 close to the housing 33, and partially attached to the shielding layer 382.

In an exemplary implementation, the isolation layer 39 may separate the camera assembly from a remaining structure in the display device, and may protect the camera assembly.

In an exemplary implementation, the isolation layer 83 may be made of a Polyethylene Terephthalate (PET) plastic.

In an exemplary implementation, the display device may further include a second adapter which may include a fifth adapter section and a sixth adapter section. The fifth adapter section extends along the third direction, and the sixth adapter section extends along the fourth direction. The fifth adapter section and the sixth adapter section are disposed at an included angle.

In an exemplary implementation, the fifth adapter section is fixedly connected to the housing, and the sixth adapter section is fixedly connected to the bezel of the frame. A position of the housing to which the fifth adapter section is connected is different from a position of the housing to which the first adapter section is connected, and a position of the frame to which the sixth adapter section is connected is different from a position of the frame to which the first adapter is connected.

In an exemplary implementation, the display device may further include a fourth fixing connector and a fifth fixing connector.

In the exemplary implementation, a sixth mounting hole and a seventh mounting hole are opened on the second adapter, the sixth mounting hole is disposed on the fifth adapter section, the seventh mounting hole is disposed on the sixth adapter section. An eighth mounting hole is further opened on the housing, and a ninth mounting hole is further opened on the frame.

In an exemplary implementation, the fourth fixing connector fixedly connects the second adapter with the housing through the sixth mounting hole and the eighth mounting hole.

In an exemplary implementation, the fourth fixing connector includes a screw.

In an exemplary implementation, the fifth fixing connector fixedly connects the second adapter with the frame through the seventh mounting hole and the ninth mounting hole.

In an exemplary implementation, the fifth fixing connector includes a screw.

FIG. 11 is a schematic diagram of a shooting angle of a camera assembly. As shown in FIG. 11, L1 and L2 are boundaries of a display region of a display assembly, L0 is a center of the display region, and e is a viewing range of human eyes, which is a dynamic region. When displaying in different usage scenarios, e is at different positions at the center L0 of the display region, and a corresponding angle a between the camera and a centerline is also different. Since the camera itself has a certain viewing angle range, the camera assembly may be adjusted for different scenarios in actual use.

In an exemplary implementation, the display device may be a light field display device. The light field display is a true 3D volumetric display, which can achieve a same true 3D scenario as the real world. Generally, a beam with a known direction is called a light field in space.

In an exemplary implementation, the light field display device may be a small-sized near-eye display device, such as an Augmented Reality (AR) display device, or may be a Virtual Reality (VR) display device, or may also be used as another small-sized display device that can achieve stereoscopic three-dimensional display. A small-sized light field display device can be applied to a wearable system or an access control system. The light field display device can also be a large-sized three-dimensional display device. A large-sized light field display device can be used in a 3D medical system.

In an exemplary implementation, the display device may be any product or component with a display function, such as a mobile phone, a tablet computer, a television, a display, a laptop computer, a digital photo frame, or a navigator.

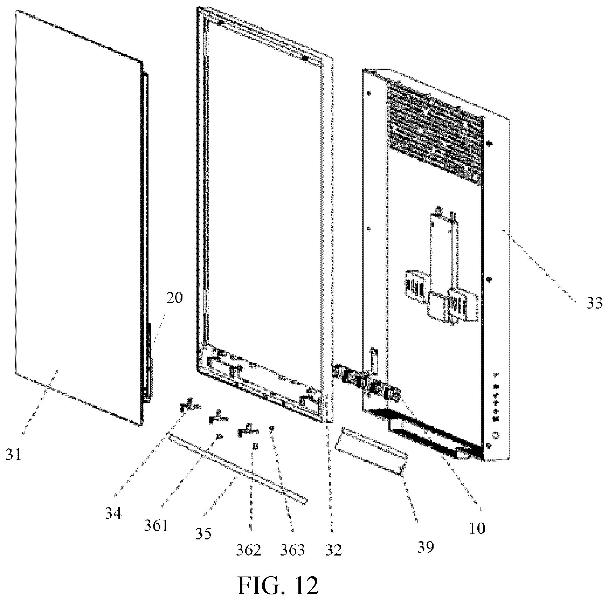

A method for assembling a display device is also provided in an embodiment of the present disclosure, which is configured to form a display device. FIG. 12 is an assembly diagram of a display device including a display assembly 20, a camera assembly 10, a transparent protective layer 31, an adhesive layer 35, a first adapter 34, a frame 32, and a housing 33, as shown in FIG. 12. The method for assembling a display device may include the following acts S1 to S5.

In the act S1, the display assembly 20 is attached to the transparent protective layer 31.

In the act S2, the first adapter 34 is fixed to the frame 32.

In the act S3, the adhesive layer 35 is formed on the frame 32, and the frame 32 on which the adhesive layer 35 is formed is attached to the transparent protective layer 31.

In act S4, the camera assembly 10 is fixed to the first adapter 34.

In act S5, the housing 33 is fixed to the first adapter 34.

In an exemplary implementation, the display device may further include a shielding layer, a control circuit board, and an isolation layer. After the act S1, the method for assembling a display device may further include an act S6.

In the act S6, the shielding layer and the control circuit board are sequentially disposed on a side of the display assembly away from the transparent protective layer.

In an exemplary implementation, after act S4, the method for assembling a display device may further include: partially attaching the isolation layer to the shielding layer.

In an exemplary implementation, the display device includes a first fixing connector, a second fixing connector, and a third fixing connector, the first adapter has a first mounting hole, a second mounting hole, and a third mounting hole, the frame has a fourth mounting hole, the housing has a fifth mounting hole, and the camera assembly has a camera mounting hole.

In an exemplary implementation, the act S2 may include fixing, by the first fixing connector, the first adapter to the frame through the first mounting hole and the fourth mounting hole.

In an exemplary implementation, the act S4 may include fixing, by the second fixing connector, the camera assembly to the first adapter through the second mounting hole and the camera mounting hole.

In an exemplary implementation, the act S5 may include fixing, by the third fixing connector, the housing to the first adapter through the third mounting hole and the fifth mounting hole.

The accompanying drawings of the present disclosure only involve the structures involved in the embodiments of the present disclosure, and other structures may refer to usual designs.

For the sake of clarity, a thickness and size of a layer or a micro structure are enlarged in the accompanying drawings used for describing the embodiments of the present disclosure. It may be understood that when an element such as a layer, film, region, or substrate is described as being "on" or "under" another element, the element may be "directly" located "on" or "under" the another element, or there may be an intermediate element.

Although the implementations of the present disclosure are disclosed above, the contents are only implementations used for ease of understanding of the present disclosure, but not intended to limit the present disclosure. Any of those skilled in the art of the present disclosure can make any modifications and variations in the implementation and details without departing from the spirit and scope of the present disclosure. However, the protection scope of the present disclosure should be subject to the scope defined by the appended claims.

## Claims

1. A camera assembly comprising: a circuit board, and at least one first camera and at least one second camera which are disposed on the circuit board; wherein
the first camera is configured to form a face image under control of a drive signal;
the second camera is configured to form an eyeball image under control of a drive signal;
the circuit board is electrically connected to the first camera and the second camera, respectively, and configured to generate a drive signal and acquire the face image and the eyeball image.

2. The camera assembly of claim 1, further comprising: at least one light source assembly disposed on the circuit board; wherein
the light source assembly is electrically connected to the circuit board, and configured to emit invisible light under control of a drive signal;
the second camera is configured to receive invisible light reflected by a human eye, and form the eyeball image based on the invisible light reflected by the human eye.

3. The camera assembly of claim 2, wherein the circuit board comprises a first interface and at least one camera mounting hole;
the first interface is configured to transmit signals received or output by the circuit board.

4. The camera assembly of claim 3, further comprising: an external assembly; wherein
the external assembly is electrically connected to the first interface, and configured to transmit signals with the first interface.

5. The camera assembly of claim 4, wherein the external assembly comprises: an external transmission section, a second interface, and a third interface, wherein the second interface and the third interface are located at opposite sides of the external transmission section, respectively;
the external transmission section is electrically connected to the second interface and the third interface, respectively, and the second interface is further electrically connected to the first interface.

6. The camera assembly of any one of claims 2 to 5, wherein a centerline of the circuit board comprises: a first centerline extending along a first direction, and a second centerline extending along a second direction, the first direction intersects with the second direction;
when a quantity of the first cameras is at least two, the at least two first cameras are arranged along the first direction, and the at least two first cameras are symmetrically disposed with respect to the second centerline;
when a quantity of the second cameras is at least two, the at least two second cameras are arranged along the first direction, and the at least two second cameras are symmetrically disposed with respect to the second centerline;
when a quantity of light source assemblies is at least two, the at least two light source assemblies are arranged along the first direction, and the at least two light source assemblies are arranged symmetrically with respect to the second centerline.

7. The camera assembly of any one of claims 2 to 5, wherein the first camera comprises a grayscale camera, the second camera comprises an infrared camera, and the light source assembly comprises one or more invisible light sources;
the invisible light source comprises an infrared light source.

8. A display device comprising: a display assembly and the camera assembly of any one of claims 1 to 7, wherein the display assembly has a display surface, a non-display surface, and a plurality of side surfaces, the display surface and the non-display surface are disposed opposite to each other;
the camera assembly is disposed on at least one side surface of the display assembly.

9. The display device of claim 8, further comprising: a frame; wherein the frame comprises a bezel and a cover plate disposed within the bezel, wherein a first region and a second region are provided within the bezel, the second region is located on a side of the first region, the cover plate is disposed in the first region, and the second region is a hollow region;
the bezel is disposed around a periphery of the display assembly and the camera assembly, the cover plate covers the display assembly and is located on the non-display surface of the display assembly, and the camera assembly is disposed in the second region.

10. The display device of claim 9, further comprising: a first adapter located in the second region and fixedly connected to the frame and the camera assembly, respectively.

11. The display device of claim 10, further comprising: a housing disposed on a side of the cover plate away from the display assembly, and fixedly connected to the first adapter;
wherein a length of the housing along an arrangement direction of the display assembly and the camera assembly is less than a length of the frame along the arrangement direction of the display assembly and the camera assembly.

12. The display device of claim 11, wherein the first adapter comprises: a first adapter section, a second adapter section, a third adapter section, and a fourth adapter section; each of the first to fourth adapter sections has a first surface, a second surface, and a plurality of side surfaces, the first surface and the second surface are opposite to each other;
the third adapter section, the first adapter section, the fourth adapter section, and the second adapter section are sequentially arranged along a third direction, the first adapter section and the second adapter section extend along the third direction, an extension direction of the third adapter section extends along a fourth direction, an extension direction of the fourth adapter section extends along a fifth direction, and any two of the third direction, the fourth direction and the fifth direction intersect with each other;
one side surface of the third adapter section and the second surface of the first adapter section are connected and disposed at an included angle, one side surface of the first adapter section is connected with a middle part of the first surface of the fourth adapter section, and one side surface of the second adapter section and the second surface of the fourth adapter section are connected and disposed at an included angle;
an included angle between the first adapter section and the third adapter section is larger than an included angle between the fourth adapter section and the second adapter section, and an included angle between the fourth adapter section and the first surface of the first adapter section is larger than an included angle between the fourth adapter section and the second surface of the first adapter section;
the included angle between the fourth adapter section and the second adapter section is an acute angle.

13. The display device of claim 12, further comprising: a first fixing connector, a second fixing connector, and a third fixing connector, wherein the camera assembly has a camera mounting hole, the first adapter has a first mounting hole located at the third adapter section, a second mounting hole located at the fourth adapter section, a third mounting hole located at the second adapter section, the bezel has a fourth mounting hole, and the housing has a fifth mounting hole;
the first fixing connector fixes the first adapter with the frame through the first mounting hole and the fourth mounting hole;
the second fixing connector fixes the first adapter with the camera assembly through the second mounting hole and the camera mounting hole;
the third fixing connector fixes the first adapter with the housing through the third mounting hole and the fifth mounting hole;
the first fixing connector, the second fixing connector, and the third fixing connector comprise screws.

14. The display device of claim 10 or 11, further comprising: a transparent protective layer and an adhesive layer, wherein the transparent protective layer is disposed on a light emitting surface of the display assembly, and covers the display assembly and the camera assembly;
the transparent protective layer is attached to the frame through the adhesive layer;
the transparent protective layer comprises tempered glass.

15. The display device of claim 14, further comprising: a light shielding layer disposed on a side of the transparent protective layer close to the display assembly, wherein the light shielding layer comprises a first via region, a second via region, a third via region, and a fourth via region; the camera assembly comprises a first camera, a second camera and a light source assembly;
the display assembly comprises a display region and a non-display region, and an orthographic projection of the light shielding layer on the transparent protective layer is overlapped, at least partially, with an orthographic projection of the non-display region of the display assembly on the transparent protective layer, and is not overlapped with orthographic projections of the display region and the first camera on the transparent protective layer;
an orthographic projection of the first via region on the transparent protective layer is overlapped, at least partially, with the orthographic projection of the display region on the transparent protective layer, an orthographic projection of the second via region on the transparent protective layer is overlapped, at least partially, with the orthographic projection of the first camera on the transparent protective layer, an orthographic projection of the third via region on the transparent protective layer is overlapped, at least partially, with an orthographic projection of the second camera on the transparent protective layer, and an orthographic projection of the fourth via region on the transparent protective layer is overlapped, at least partially, with an orthographic projection of the light source assembly on the transparent protective layer.

16. The display device of claim 15, further comprising: a light filter layer configured to transmit invisible light emitted by the light source assembly, and disposed in a same layer as the light shielding layer; wherein
the light filter layer is located in the third via region and the fourth via region.

17. The display device of claim 16, wherein the light filter layer comprises a first sub-filter located in the third via region, and a second sub-filter located in the fourth via region;
the cameras comprises shooting lenses, the second via region and the third via region are circular in shape and have diameters larger than diameters of a shooting lens of the second camera and a shooting lens of the first camera.

18. The display device of any one of claims 15 to 17, further comprising: a color matching layer disposed in a same layer as the light shielding layer; wherein
the light shielding layer further comprises a fifth via region, an orthographic projection of the fifth via region on the transparent protective layer is located between the orthographic projection of the display region on the transparent protective layer and an orthographic projection of the camera assembly on the transparent protective layer, and the color matching layer is located in the fifth via region.

19. The display device of claim 14, further comprising: a control circuit board, wherein the control circuit board comprises a fourth interface, the camera assembly comprises a circuit board and an external assembly, the external assembly comprises a third interface, the fourth interface of the control circuit board is electrically connected to the third interface of the camera assembly;
the control circuit board is configured to generate a control signal and track a position of an eyeball according to a face image and an eyeball image;
the circuit board is configured to generate a drive signal based on the control signal.

20. The display device of claim 19, further comprising: a shielding layer and an isolation layer; wherein
the shielding layer is disposed between the display assembly and the control circuit board;
the isolation layer is disposed on a side of the camera assembly close to the housing, and partially attached to the shielding layer.

21. A method for assembling a display device, configured to form the display device of any one of claims 8 to 20, wherein the display device comprises: a display assembly, a camera assembly, a transparent protective layer, an adhesive layer, a first adapter, a frame, and a housing, and the method comprises:
attaching the display assembly to the transparent protective layer;
fixing the first adapter to the frame;
forming the adhesive layer on the frame, and attaching the frame with the formed adhesive layer to the transparent protective layer;
fixing the camera assembly to the first adapter; and
fixing the housing to the first adapter.

22. The method of claim 21, wherein the display device further comprises: a shielding layer, a control circuit board, and an isolation layer;
after attaching the display assembly to the transparent protective layer, the method further comprises:
disposing sequentially the shielding layer and the control circuit board on a side of the display assembly away from the transparent protective layer;
after fixing the camera assembly to the first adapter, the method further comprises:
attaching partially the isolation layer to the shielding layer.

23. The method of claims 21 and 22, wherein the display device comprises: a first fixing connector, a second fixing connector, and a third fixing connector, the first adapter has a first mounting hole, a second mounting hole, and a third mounting hole, the frame has a fourth mounting hole, the housing has a fifth mounting hole, and the camera assembly has a camera mounting hole;
fixing the first adapter to the frame comprises: fixing, by the first fixing connector, the first adapter to the frame through the first mounting hole and the fourth mounting hole;
fixing the camera assembly to the first adapter comprises: fixing, by the second fixing connector, the camera assembly to the first adapter through the second mounting hole and the camera mounting hole; and
fixing the housing to the first adapter comprises: fixing, by the third fixing connector, the housing to the first adapter through the third mounting hole and the fifth mounting hole.
